# EUROPÄISCHE PATENTSCHRIFT

(11) **EP 2 185 318 B1**
(45) Veröffentlichungstag und Bekanntmachung des Hinweises auf die Patenterteilung: **16.03.2011**
(21) Anmeldenummer: 08785588.8
(22) Anmeldetag: 16.08.2008
(51) Int. Cl.: B23Q 16/02, B23B 29/24

(54) **WERKZEUGREVOLVER**
TOOL TURRET
TOURELLE REVOLVER

(30) Priorität: 13.09.2007 DE 102007043775
(43) Veröffentlichungstag der Anmeldung: 19.05.2010
(73) Patentinhaber: Sauter Feinmechanik GmbH, 72555 Metzingen (DE)
(72) Erfinder: SCHIPS, Günther, 72793 Pfullingen (DE); EBERLE, Michael, 72581 Dettingen (DE); KOTZUR, Markus, 72770 Reutlingen (DE)
(74) Vertreter: Bartels, Martin Erich Arthur
(86) Internationale Anmeldenummer: PCT/EP2008/006746
(87) Internationale Veröffentlichungsnummer: WO 2009/036850

(56) Entgegenhaltungen:
- EP-A- 1 287 931
- DE-A1- 4 125 003
- DE-A1- 19 838 505

## Beschreibung

Die Erfindung betrifft einen Werkzeugrevolver mit einem an einer Werkzeugmaschine anzubringenden oder angebrachten Grundkörper, der eine Revolverachse definiert, um die drehbar am Grundkörper eine Werkzeugscheibe gelagert ist, die mehrere an ihrem Umfang verteilte Werkzeugstationen aufweist, die durch Drehen der Werkzeugscheibe jeweils in mindestens eine Arbeitsposition einstellbar sind, in der ein im Inneren der Werkzeugscheibe befindlicher Werkzeugantrieb mit seinem antriebsseitigen Kupplungsteil mit einem werkzeugseitigen Kupplungsteil für den Antrieb eines Werkzeuges in Kupplungseingriff kommt, das sich an der auf die Arbeitsposition ausgerichteten Werkzeugstation befindet, gemäß der Merkmalsausgestaltung des Oberbegriffes des Patentanspruches 1.

Werkzeugrevolver dieser Art sind bekannt. So zeigen beispielsweise die DE 689 08 208 T2 oder DE 10 2005 033 890 A1 Werkzeugrevolver dieser Art, die für den Einsatz bei Werkzeugmaschinen, wie Drehmaschinen, Bearbeitungszentren und ähnlichen Vorrichtungen, vorgesehen sind. Bei der Benutzung solcher Werkzeugrevolver handelt es sich bei den an den Werkzeugstationen der Werkzeugscheibe befindlichen Werkzeugen, die zum Einsatz kommen sollen, sowohl um stillstehende Werkzeuge, wie Drehmeißel und dergleichen, als auch um sog. Rotationswerkzeuge für Bearbeitungsvorgänge, wie Bohren, Fräsen und dergleichen. In einem derartigen Fall erfolgt der Drehantrieb für das betreffende Rotationswerkzeug; das sich an der in der Arbeitsposition befindlichen Werkzeugstation befindet, über den internen Werkzeugantrieb, mit dem ein betreffendes, werkzeugseitig Kupplungsteil in Kupplungseingriff kommen kann, wenn sich die Werkzeugstation, an der das Rotationswerkzeug angebracht ist, in einer definierten Arbeitsposition befindet.

Die Festlegung der Winkelstellung der Arbeitsposition relativ zum Grundkörper ist in manchen Fällen nachteilig. Während bei Drehbearbeitungen eine festgelegte Winkelstellung der Arbeitsposition zweckmäßig ist, weil dabei stets auf Mitte der Werkstückachse eine spanende Bearbeitung vorgenommen wird, ist es vielfach wünschenswert, auch außerhalb der festgelegten Winkelposition Bohr- oder Fräsbearbeitungen vornehmen zu können, wobei die Vorschub- oder Bearbeitungsrichtung nicht rechtwinklig zur Werkstückachse erfolgt.

Durch die DE 41 25 003 A1 ist ein gattungsgemäßer Werkzeugrevolver bekannt mit einem an einer Werkzeugmaschine anzubringenden oder an gebrachten Grundkörper, der eine Revolverachse definiert, um die drehbar am Grundkörper eine Werkzeugscheibe gelagert ist, die mehrere an ihrem Umfang verteilte Werkzeugstationen aufweist, die durch Drehen der Werkzeugscheibe jeweils in mindestens eine Arbeitsposition einstellbar sind, in der ein im inneren der Werkzeugscheibe befindlicher Werkzeugantrieb mit seinem antriebsseitigen Kupplungsteil mit einem werkzeugseitigen Kupplungsteil für den Antrieb eines Werkzeuges in Kupplungseingriff kommt, das sich an der auf die Arbeitsposition ausgerichteten Werkzeugstation befindet, wobei der Werkzeugantrieb einen in der Werkzeugscheibeidrehbar angeordneten Getriebekopf aufweist, wobei eine zwischen Werkzeugscheibe und Getriebekopf befindliche Schaltkupplung vorhanden ist, die zwischen einer ersten Schaltstellung, in der der Getriebekopf und die Werkzeugscheibe miteinander drehfest verbunden sind, und einerzweiten Schaltstellung umschaltbar ist, in der der Getriebekopf von der Werkzeugscheibe entkuppelt und mit dem Grundkörper drehfest verbunden ist, wobei die Schaltkupplung eine Zahnkupplung mit Kupplungszähnen aufweist, die in der ersten Schaltstellung die Werkzeugscheibe formschlüssig mit einem Gehäuseteil des Getriebekopfes verbinden, und wobei die Schaltkupplung durch eine Schaltwelle betätigbar ist, die zur Revolverachse konzentrisch im Grundkörper und in der Werkzeugscheibe axial zwischen der ersten Schaltstellung und der zweiten Schaltstellung entsprechenden Positionen axial verschiebbar ist.

Im Hinblick auf diese Problematik stellt sich die Erfindung die Aufgabe, einen Werkzeugrevolver zur Verfügung zu stellen, mit dem Bearbeitungsvorgänge mittels Rotationswerkzeugen nicht nur bei Einstellung der Werkzeugscheibe auf eine definierte Arbeitsposition vorgenommen werden können, sondern auch in solchen Fällen, wo sich die Werkzeugscheibe in einer gewünschten beliebigen Drehposition befindet.

Erfindungsgemäß ist diese Aufgabe durch einen Werkzeugrevolver gelöst, der die Merkmale des Patentanspruches 1 in seiner Gesamtheit aufweist.

Danach besteht eine wesentliche Besonderheit der Erfindung darin, dass die für das Kuppeln und Entkuppeln von Getriebekopf und Werkzeugscheibe vorgesehenen Kupplungszähne an dem sich durch das Gehäuse des Getriebekopfes erstreckenden vorderen Endbereich der Schaltwelle angeordnet sind und mit zugeordneten Zahnsitzen am vorderen Endbereich der Werkzeugscheibe und dem benachbarten vorderen Gehäuseteil des Getriebekopfes bei entsprechenden Axialstellungen der Schaltwelle in und außer Eingriff bringbar sind,

so dass der Getriebekopf bei der Schwenkbewegung der Werkzeugscheibe mitbewegbar ist, oder Getriebekopf und Werkzeugscheibe zu entkuppeln und dabei eine drehfeste Verbindung zwischen Getriebekopf und Grundkörper herzustellen. Dadurch ergibt sich die Möglichkeit einer universellen Benutzung, wobei bei der einen Schaltstellung der Schaltkupplung die Werkzeugscheibe unabhängig vom Getriebekopf schwenkbar ist, der Getriebekopf und damit der eigentliche Werkzeugantrieb in einer definierten Winkelposition relativ zum Grundkörper wobei der Getriebekopf und damit der Werkzeugantrieb für den Betrieb eines Rotationswerkzeuges in einer definierten Ausgangs-Arbeitsposition festgelegt ist und wobei stillstehende Bearbeitungswerkzeuge in beliebigen Arbeitspositionen zum Einsatz gebracht werden können. Bei der anderes Schaltstellung der Schaltkupplung kann der Getriebekopf bei der Schwenkbewegung der Werkzeugscheibe mitgedreht werden, und zwar in beliebige gewünschte Winkelpositionen des Werkzeugantriebes relativ zum Grudkörper. Somit können Rotationswerkzeuge in Arbeitspositionen betrieben werden, die gegenüber der Ausgangs-Arbeitsposition um gewünschte Winkel versetzt sind, wobei beliebige Winkelabweichungen, etwa von wenigen Winkelgraden oder größeren Winkeln, benutzt werden können.

Die Schaltkupplung weist eine Zahnkupplung mit Kupplungszähnen auf, die in der ersten Schaltstellung die Werkzeugscheibe formschlüssig mit einem Gehäuseteil des Getriebekopfes verbinden. Dadurch, dass die Kupplungszähne im unmittelbaren Grenzbereich zwischen Werkzeugscheibe und dem innerhalb de selben befindlichen Gehäuseteil einen Formschluß bilden, ergibt sich eine besonders drehsteife Kupplungsverbindung.

Die Schaltkupplung ist durch eine Schaltweile betätigbar, die zur Revolverachse konzentrisch im Grundkörper und in der Werkzeugscheibe axial zwischen der ersten Schaltstellung und der der zweiten Schaltstellung entsprechenden Positionen axial verschiebbar ist.

Vorzugsweise ist die Anordnung hierbei so getroffen, dass die Schaltwelle in einem innerhalb des Grundkörpers befindlichen Bereich als Bestandteil der Schaltkupplung einen eine Einzahnkupplung bildenden, radial vorstehenden Kupplungszahn aufweist, der bei der zweiten Schaltstellung in formschlüssigen Eingriff mit einem Zahnsitz am Grundkörper kommt und die drehfeste Verbindung zwischen Getriebekopf und Grundkörper bildet.

Vorzugsweise sind hierbei die Lagebeziehungen zwischen Kupplungszahn der Einzahnkupplung und einem zugeordneten Zahnsitz am Grundkörper so gewählt, dass der Kupplungszahn bei einer einer Ausgangs-Arbeitsposition entsprechenden Stellung des Getriebekopfes mit dem Zahnsitz in Eingriff kommt.

Bei bevorzugten Ausführungsbeispielen ist die Schaltwelle von einer ersten im Grundkörper gelagerten Hohlwelle, die als Antriebswelle des Getriebekopfes für den Werkzeugantrieb vorgesehen ist, und von einer zweiten, darüberliegend im Grundkörper gelagerten Hohlwelle umgeben, die mit der Werkzeugscheibe als Schwenkantriebswelle verbunden ist. Durch eine solche konzentrische Anordnung dreier Hauptkomponenten, die sich zwischen Werkzeugscheibe und Grundkörper erstrecken, ist eine besonders kompakte Bauweise des Werkzeugrevolvers realisierbar.

Dies gilt insbesondere für Ausführungsbeispiele, bei denen auf der zweiten Hohlwelle der Rotor eines Torque-Motors für einen Direktantrieb der Schwenkbewegung der Werkzeugscheibe angeordnet ist, der Schwenkantrieb daher getriebelos erfolgt, so dass ein Minimum an Bauraum erforderlich ist.

Nachstehend ist die Erfindung anhand der Zeichnung im Einzelnen erläutert. Es zeigen:
- Fig. 1 eine schematisch vereinfacht und gegenüber einer praktischen Ausführungsform in kleinerem Maßstab gezeichnete Vorderansicht eines Ausführungsbeispieles des erfindungsgemäßen Werkzeugrevolvers, wobei an einer auf eine Ausgangs-Arbeitsposition ausgerichteten Werkzeugstation eine Werkzeugaufnahme für ein Rotationswerkzeug angebracht ist;
- Fig. 2 eine der Fig. 1 entsprechende Vorderansicht, wobei die die Werkzeugaufnahme aufweisende Werkzeugstation aus der Ausgangs-Arbeitsposition um mehrere Winkelgrad im Uhrzeigersinn verdreht ist;
- Fig. 3 eine gegenüber Fig. 1 und 2 in größerem Maßstab, stark vereinfacht und aufgeschnitten gezeichnete Darstellung des Ausführungsbeispieles des Werkzeugrevolvers, wobei eine Schaltkupplung in einer ersten Schaltstellung gezeigt ist, und
- Fig. 4 eine der Fig. 3 entsprechende Darstellung, wobei die Schaltkupplung in der zweiten Schaltstellung gezeigt ist.

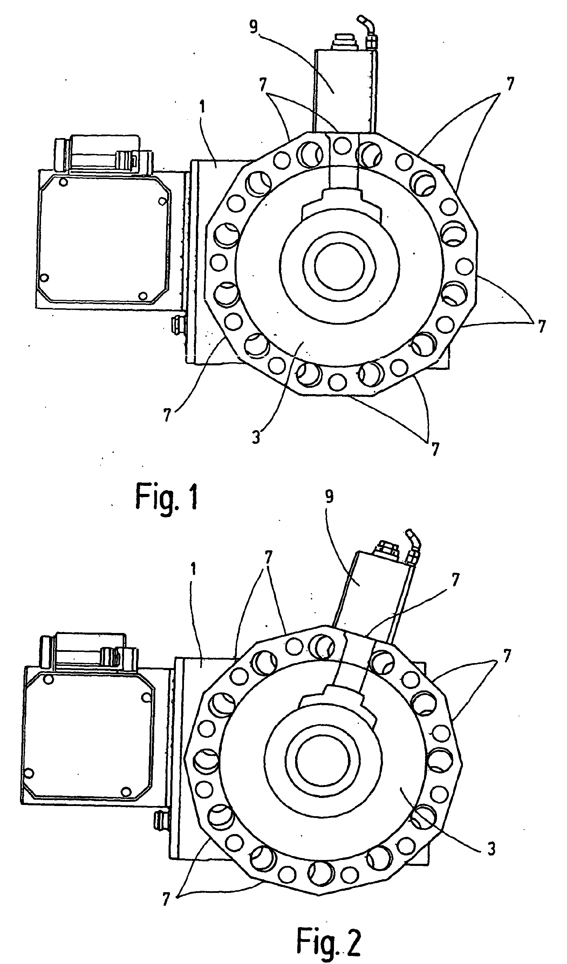

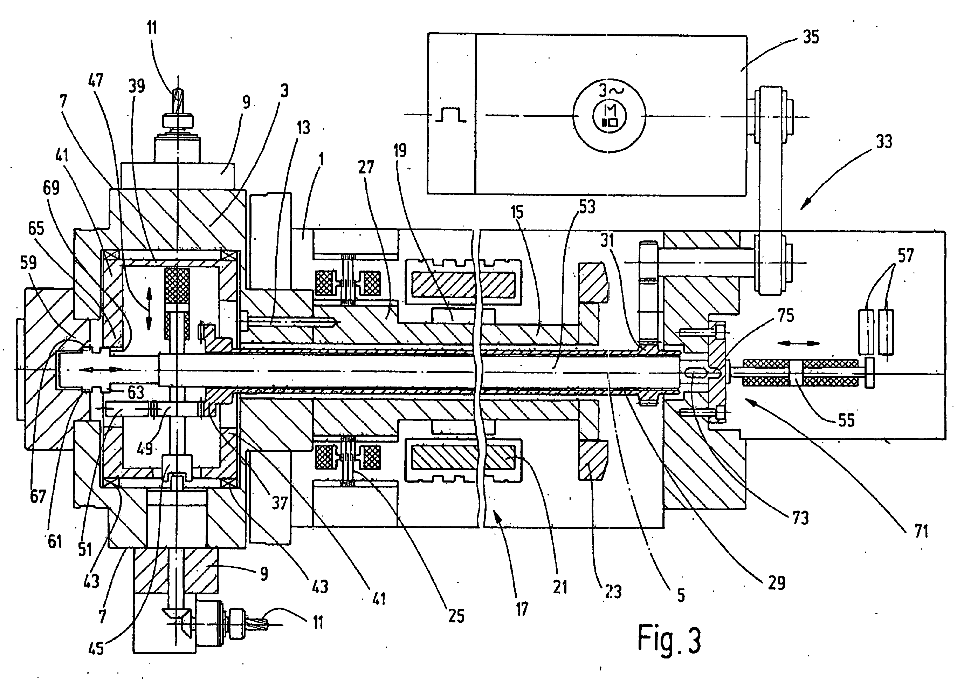

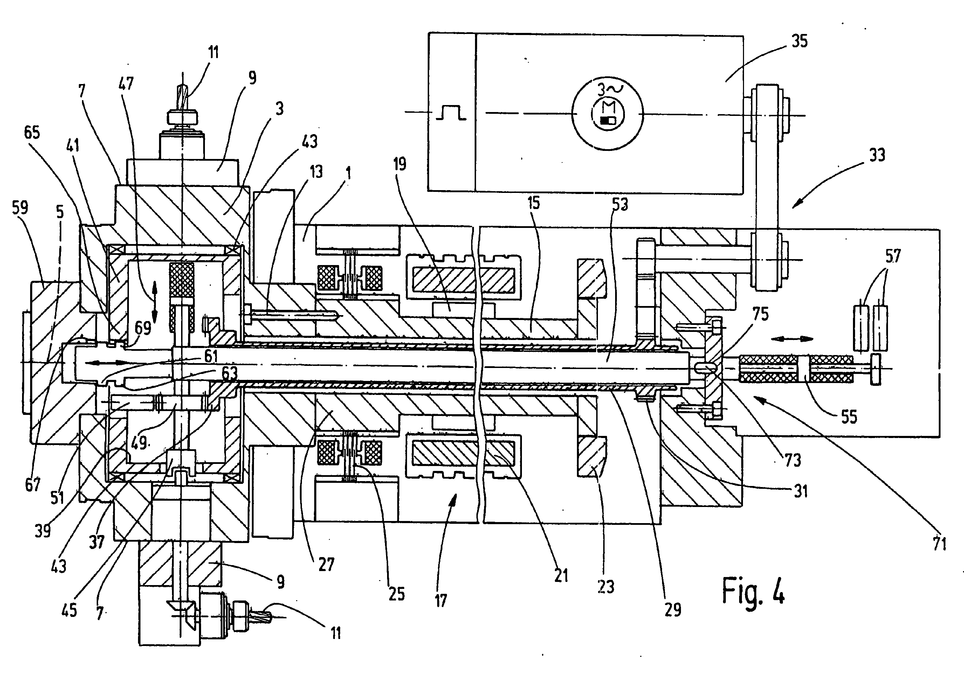

Das in der Zeichnung dargestellte Ausführungsbeispiel des Werkzeugrevolvers weist einen Grundkörper 1 in der Gestalt eines länglichen Blockes auf, an dem eine Werkzeugscheibe 3 um eine Revolverachse 5 drehbar gelagert ist. Wie aus Fig. 1 und 2 entnehmbar, weist die Werkzeugscheibe 3 an ihrem Umfang verteilt zwölf Werkzeugstationen 7 auf, von denen in Fig. 1 und 2 lediglich einige beziffert sind und von denen bei der Darstellung von Fig. 1 und 2 lediglich eine Werkzeugstation 7 mit einer Werkzeugaufnahme 9 bestückt ist. Diese Werkzeugaufnahme 9 ist für ein in Fig. 1 und 2 nicht dargestelltes Rotationswerkzeug vorgesehen. Bei der Darstellung von Fig. 3 und 4 sind zwei Werkzeugstationen 7 jeweils mit einer Werkzeugaufnahme 9 bestückt, in denen jeweils ein Rotationswerkzeug in Form eines Bohrers 11 aufgenommen ist.

Bei der Darstellung von Fig. 1 ist die Werkzeugaufnahme 9 in einer Ausgangs-Arbeitsposition dargestellt, während Fig. 2 die Werkzeugaufnahme 9 in einer demgegenüber um etwa 15 Winkelgrad im Uhrzeigersinn verdrehten Position dargestellt ist. Wie nachstehend anhand der Fig. 3 und 4 näher erläutert, ist ein in der Werkzeugaufnahme 9 befindliches Rotationswerkzeug sowohl in der Ausgangs-Arbeitsposition von Fig. 1 als auch in beliebigen, demgegenüber verdrehten Arbeitspositionen antreibbar.

Die Fig. 3 und 4 zeigen, dass die Werkzeugscheibe 3 über eine Verschraubung, von der lediglich eine Schraube 13 zu sehen, mit einer im Grundkörper 1 drehbar gelagerten Hohlwelle 15 verbunden ist, die in der Zeichnung verkürzt dargestellt ist und die Schwenkantriebswelle für die Werkzeugscheibe 3 bildet. Dieser Antrieb erfolgt als getriebeloser Direktantrieb mittels eines Torque-Motors 17, dessen Rotor 19 unmittelbar auf der Hohlwelle 15 innerhalb des zugeordneten, gehäusefesten Stators 21 angeordnet ist. In Verbindung mit einem dem freien Endbereich der Hohlwelle 15 sensorisch zugeordneten Meßsystem 23 ist die Werkzeugscheibe 3 auf genau definierte Drehpositionen einstellbar. Für eine spielfreie Festlegung der Werkzeugscheibe 3 in einer gewünschten Drehstellung ist eine hydraulisch betätigbare Lamellenbremse 25 mit einem Lamellenpacket aus gehäusefesten Lamellen und Lamellen, die mit einem an die Werkzeugscheibe 3 angrenzenden Endbereich 27 der Hohlwelle 15 verbunden sind, vorgesehen.

Die zur Revolverachse 5 konzentrische Hohlwelle 15 umgibt die Außenseite einer weiteren konzentrischen Hohlwelle 29, die als Antriebswelle für den Werkzeugantrieb vorgesehen ist, der sich innerhalb der Werkzeugscheibe 3 befindet. Zu diesem Zweck weist diese Hohlwelle 29 an dem von der Werkzeugscheibe 3 entfernt gelegenen Ende ein Zahnritzel 31 auf, das über ein kombiniertes Zahnrad-Zahnriemengetriebe 33 mit einem Antriebsmotor 35 in Getriebeverbindung ist. Das in der Werkzeugscheibe 3 gelegene andere Ende der Hohlwelle 29 trägt ein Tellerrad 37, das die Antriebsseite eines Getriebekopfes 39 bildet, der innerhalb der Werkzeugscheibe 3 als Werkzeugantrieb vorgesehen ist. Der Getriebekopf 39 weist ein Getriebegehäuse 41 auf, das mittels Wälzlagern 43 in der Werkzeugscheibe 3 drehbar gelagert ist. Die Abtriebsseite der Getriebeanordnung des Getriebekopfes 39 weist einen Mitnehmer 45 auf, der durch hydraulische Betätigung in Richtung eines Doppelpfeiles 47 verfahrbar ist, um den Kupplungseingriff mit einem werkzeugseitigen Kupplungsteil herzustellen und damit die Antriebsverbindung zum Bohrer 11 herzustellen, der sich in der betreffenden Werkzeugaufnahme 9 befindet. Der Antrieb des Mitnehmers 45 erfolgt über ein mit dem Tellerrad 37 kämmendes Zahnritzel 49, dessen Drehstellung, um das Einrücken des Mitnehmers 45 sicher zu stellen, durch einen Sensor 51 abgefragt wird.

Als drittes, zur Revolverachse 5 konzentrisches Bauteil ist innerhalb der Hohlwelle 29 eine Schaltwelle 53 vorgesehen, die in beiden Richtungen axial verschiebbar und in eine erste und in eine zweite Kupplungs-Schaltstellung durch hydraulische Ansteuerung eines Hydrokolbens 55 einstellbar ist, wobei die Schaltstellungen durch Lagesensoren 57 abgefragt werden.

Die Schaltwelle 53 bildet den Hauptbestandteil einer Schaltkupplung, die durch die Axialverschiebung der Schaltwelle 53 auf zwei Schaltstellungen einstellbar ist, nämlich eine in Fig. 3 dargestellte erste Schaltstellung, bei der die Schaltwelle 53 in Richtung auf die Werkzeugscheibe 3 vorgeschoben ist, d. h. in den Figuren nach links verschoben ist, und eine zweite Schaltstellung, die in Fig. 4 dargestellt ist, wobei die Schaltwelle 53 rückwärts, d. h. in den Figuren nach rechts, verschoben ist. Die Schaltwelle 53, die sich über das Tellerrad 37 der Hohlwelle 29 hinaus durch den Getriebekopf 39 hindurch bis in einen stirnseitigen Endbereich 59 der Werkzeugscheibe 3 erstreckt, weist zwei in geringem Abstand nebeneinander liegende Kupplungszähne 61 und 63 auf, für deren Eingriff im Endbereich 59 der Werkzeugscheibe 3 und im angrenzenden Gehäuseteil 65 des Getriebekopfes 39 Zahnsitze 67 bzw. 69 ausgebildet sind. Bei der in Fig. 3 gezeigten ersten Schaltstellung, wo beide Kupplungszähne 61 und 63 mit einem Zahnsitz 67 bzw. 69 in Eingriff sind, sind Getriebekopf 39 und Werkzeugscheibe 3 drehfest miteinander verriegelt, so dass eine Einstell-Schwenkbewegung der Werkzeugscheibe 3 den Getriebekopf 39 mitschleppt und damit den Antrieb eines Rotationswerkzeuges in einer beliebigen gewünschten Position, in die der Getriebekopf 39 bei der Drehung der Werkzeugscheibe 3 mitgenommen ist, ermöglicht.

Andererseits ist bei der in Fig. 4 gezeigten zweiten Schaltstellung, bei zurückgezogener Schaltwelle 53, der Kupplungszahn 61 außer Eingriff mit dem Zahnsitz 67 am Endbereich 59 der Werkzeugscheibe 3. Bei dieser Schaltstellung kann daher die Einstell-Drehbewegung der Werkzeugscheibe 3 erfolgen, ohne dass eine Mitnahme des Getriebekopfes 39 und damit des Werkzeugantriebes für Rotationswerkzeuge erfolgt. Um bei dieser Schaltstellung den Getriebekopf 39 in einer Drehstellung, die einer Standard- oder Ausgangs-Arbeitsposition entspricht, am Grundkörper 1 festlegen zu können, ist als Bestandteil der Schaltkupplung eine Einzahnkupplung 71 am inneren Endbereich der Schaltwelle 53 vorgesehen. Diese Einzahnkupplung 71 weist einen radial vorstehenden Kupplungszahn 73 auf, der mit einem gehäusefesten Zahnsitz 75 in formschlüssigen Eingriff kommt, wenn der Getriebekopf 39 und damit die Schaltwelle 53 in die Ausgangs-Arbeitsposition durch die Drehbewegung der Werkzeugscheibe 3 mitgenommen ist. Durch den in den Zahnsitz 75 einfallenden Zahn 73 ist daher bei der zweiten Schaltstellung, bei der der Getriebekopf 39 von der Werkzeugscheibe 3 entkoppelt ist, die Drehstellung des Getriebekopfes 39 relativ zum Grundkörper festgelegt. Somit kann in der zweiten Schaltstellung die Werkzeugscheibe 3 für beliebige Einsatzzwecke unabhängig vom Werkzeugantrieb geschwenkt werden, während die Möglichkeit besteht, ein Rotationswerkzeug zu betreiben, das sich an der Werkzeugstation befindet, das auf die Ausgangs-Arbeitsposition ausgerichtet ist. Da beim gezeigten Beispiel die Bewegung der Schaltwelle 53 in die Position der zweiten Schaltstellung nur bei Einfallen des Kupplungszahnes 73 in den Zahnsitz 75 erfolgen kann, ist sichergestellt, dass der Getriebekopf 39 in die Ausgangs-Arbeitsposition von der Werkzeugscheibe 3 mitgenommen ist, wenn er von letzterer entkuppelt wird.

## Patentansprüche

1. Werkzeugrevolver mit einem an einer Werkzeugmaschine anzubringenden oder angebrachten Grundkörper (1), der eine Revolverachse (5) definiert, um die drehbar am Grundkörper (1) eine Werkzeugscheibe (3) gelagert ist, die mehrere an ihrem Umfang verteilte Werkzeugstationen (7) aufweist, die durch Drehen der Werkzeugscheibe (3) jeweils in mindestens eine Arbeitsposition einstellbar sind, in der ein im Inneren de Werkzeugscheibe (3) befindlicher Werkzeugantrieb mit seinem, antriebsseitigen Kupplungsteil (45) mit einem werkzeugseitigen Kupplungsteil für den Antrieb eines Werkzeuges (11) in Kupplungseingriff kommt, das sich an der auf die Arbeitsposition ausgerichteten Werkzeugstation (7) befindet, wobei der Werkzeugantrieb einen in der Werkzeugscheibe (3) drehbar angeordneten Getriebekopf (39) aufweist, wobei eine zwischen Werkzeugscheibe (3) und Getriebekopf (39) befindliche Schaltkupplung (53, 61, 63, 67, 69, 71) vorhanden ist, die zwischen einer ersten Schaltstellung, in der der Getriebekopf (39) und die Werkzeugscheibe (3) miteinander drehfest verbunden sind, und einer zweiten Schaltstellung umschaltbar ist, in der der Getriebekopf (39) von der Werkzeugscheibe (3) entkuppelt und mit dem Grundkörper (1) drehfest verbunden ist, wobei die Schaltkupplung eine Zahnkupplung mit Kupplungszähnen (61, 63) aufweist, die in der ersten Schaltstellung die Werkzeugscheibe (3) formschlüssig mit einem Gehäuseteil (65) des Getriebekopfes (39) verbinden, und wobei die Schaltkupplung (53, 61, 63, 67, 69, 71) durch eine Schaltwelle (53) betätigbar ist, die zur Revolverachse (5) konzentrisch im Grundkörper (1) und in der Werkzeugscheibe (3) axial zwischen der ersten Schaltstellung und der zweiten Schaltstellung entsprechenden Positionen axial verschiebbar ist, **dadurch gekennzeichnet, dass** die für das Kuppeln und Entkuppeln von Getriebekopf (39) und Werkzeugscheibe (3) vorgesehenen Kupplungszähne (61, 63) an dem sich durch das Gehäuse (41) des Getriebekopfes (39) erstreckenden vorderen Endbereich der Schaltwelle (53) angeordnet sind und mit zugeordneten ZAhnsitzen (67, 69) am vorderen Endbereich (59) der Werkzeugscheibe (3) und dem benachbarten vorderen Gehäuseteil (65) des Getriebekopfes (39) bei entsprechenden Axialstellungen der Schaltwelle (53) in und außer Eingriff bringbar sind.

2. Werkzeugrevolver nach Anspruch 1, **dadurch gekennzeichnet, dass** die Schaltwelle (53) in einem innerhalb des Grundkörpers (1) befindlichen Bereich als Bestandteil der Schaltkupplung (53, 61, 63, 67, 69, 71) einen eine Einzahnkupplug (71) bildenden, radial vorstehenden Kupplungszahn (73) aufweist, der bei der zweiten Schaltstellung in formschlüssigen Eingriff mit einem Zahnsitz (75) am Grundkörper (1) kommt und die drehfeste Verbindung zwischen Getriebekopf (39) und Grundkörper (1) bildet.

3. Werkzeugrevolver nach Anspruch 2, **dadurch gekennzeichnet, dass** der Kupplungszahn (73) der Einzahnkupplung (71) mit dem Zahnsitz (75) am Grundkörper (1) bei einer einer Ausgangs-Arbeitsposition entsprechenden Stellung des Getriebekopfes (39) in Eingriff kommt.

4. Werkzeugrevolver nach einem der Ansprüche 1 bis 3, **dadurch gekennzeichnet, dass** die Schaltwelle (53) von einer ersten im Grundkörper (1) gelagerten Hohlwelle (29), die als Antriebswelle des Getriebekopfes (39) für den Werkzeugantrieb vorgesehen ist, und von einer zweiten, darüberliegend im Grundkörper (1) gelagerten Hohlwelle (15) umgeben ist, die mit der Werkzeugscheibe (3) als Schwenkantriebswelle verbunden ist.

5. Werkzeugrevolver nach Anspruch 4, **dadurch gekennzeichnet, dass** die erste Hohlwelle (29) über ein im Cetriebekopf (39) befindliches Tellerrad (37) mit einem Antriebsritzel (49) für den Werkzeugantrieb in Eingriff ist.

6. Werkzeugrevolver nach Anspruch 4 oder 5, **dadurch gekennzeichnet, dass** auf der zweiten Hohlwelle (15) der Rotor (19) eines Torque-Motors (17) für einen Direktantrieb der Schwenkbewegung der Werkzeugscheibe (3) angeordnet ist.

7. Werkzeugrevolver nach einem der Ansprüche 4 bis 6, **dadurch gekennzeichnet, dass** zwischen dem Grundkörper (1) und der zweiten Hohlwelle (15) eine Lamellenbremse (25) zum Festlegen der Schwenkposition der Werkzeugscheibe (3) vorhanden ist.

## Claims

1. A tool turret having a base body (1) to be attached or attached to a machine tool and which defines a turret axis (5) about which, mounted rotatably on the base body (1), is a tool disc (3) which has a number of tool stations (7) distributed around its circumference which, by turning the tool disc (3), can be set respectively in at least one working position in which a tool drive located within the tool disc (3) comes with its coupling part (45) on the drive side into coupling engagement with a coupling part on the tool side for the drive of a tool (11) located on the tool station (7) aligned to the working position, the tool drive having a gear head (39) arranged rotatably in the tool disc (3), there being a switch coupling (53, 61, 63, 67, 69, 71) located between the tool disc (3) and the gear head (39) which can be switched between a first switch position, in which the gear head (39) and the tool disc (3) are connected to one another in a rotationally fixed manner, and a second switch position in which the gear head (39) is decoupled from the tool disc (3) and is connected in a rotationally fixed manner to the base body (1), the switch coupling having a toothed coupling with coupling teeth (61, 63) which in the first switch position connect the tool disc (3), with form-fit, to a housing part (65) of the gear head (39), and the switch coupling (53, 61, 63, 67, 69, 71) being operable by a switch shaft (53) which can be shifted axially towards the revolver axis (5) concentrically within the base body (1) and in the tool disc (3) axially between positions corresponding to the first switch position and to the second switch position, **characterised in that** the coupling teeth (61, 63) provided for coupling and decoupling the gear head (39) and the tool disc (3) are disposed on the front end region of the switch shaft (53) extending through the housing (41) of the gear head (39), and can be engaged and disengaged with assigned tooth seats (67, 69) on the front end region (59) of the tool disc (3) and the adjacent front housing part (65) of the gear head (39) with corresponding axial positions of the drive shaft (53).

2. The tool turret according to Claim 1, **characterised in that** the switch shaft (53) has in a region located within the base body (1) as a component of the switch coupling (53, 61, 63, 67, 69, 71) a radially projecting coupling tooth (73) forming a one-tooth coupling (71) which in the second switch position engages, with form-fit, with a tooth seat (75) on the base body (1) and forms the rotationally fixed connection between the gear head (39) and the base body (1).

3. The tool turret according to Claim 2, **characterised in that** the coupling tooth (73) of the one-tooth coupling (71) engages with the tooth seat (75) on the base body (1) in a position of the gear head (39) corresponding to an output working position.

4. The tool turret according to any of Claims 1 to 3, **characterised in that** the switch shaft (53) is surrounded by a first hollow shaft (29) mounted in the base body (1) and which is provided as a drive shaft for the gear head (39) for the tool drive, and by a second hollow shaft (15) mounted lying over the latter in the base body (1) and which is connected to the tool disc (3) as a pivot drive shaft.

5. The tool turret according to Claim 4, **characterised in that** the first hollow shaft (29) engages with a drive pinion (49) for the tool drive via a crown wheel (37) located in the gear head (39).

6. The tool turret according to Claim 4 or 5, **characterised in that** there is disposed on the second hollow shaft (15) the rotor (19) of a torque motor (17) for a direct drive of the pivot movement of the tool disc (3).

7. The tool turret according to any of Claims 4 to 6, **characterised in that** there is a multiple disc brake (25) between the base body (1) and the second hollow shaft (15) for fixing the pivot position of the tool disc (3).

## Revendications

1. Tourelle d'outil, comprenant un corps (1) de base mis ou à mettre sur une machine-outil et définissant un axe (5) de tourelle autour duquel un plateau (3) d'outil est monté tournant sur le corps (1) de base, plateau qui a plusieurs postes (7) d'outils qui sont répartis sur son pourtour et qui, par rotation du plateau (3) d'outil, peuvent être mis respectivement dans au moins une position de travail, dans laquelle un entraînement d'outil se trouvant à l'intérieur du plateau (3) d'outil vient en prise d'accouplement, par sa partie (45) d'accouplement du côté entraînement, avec une partie d'accouplement du côté outil, pour l'entraînement d'un outil (11), qui se trouve au poste (7) d'outil orienté sur la position de travail, l'entraînement d'outil ayant une tête de réduction montée tournante dans le plateau (3) d'outil, un embrayage (53, 61, 63, 67, 69, 71) se trouvant entre le plateau (3) d'outil et la tête (39) de réduction et pouvant passer entre une première position, dans laquelle la tête (39) de réducteur et le plateau (3) d'outil sont solidaires en rotation l'un de l'autre, et une deuxième position dans laquelle la tête (39) de réduction est découplée du plateau (3) d'outil et est solidaire en rotation du corps (1) de base, l'embrayage comprenant un embrayage à denture, ayant des dents (61, 63) d'accouplement qui, dans la première position du plateau (3) d'outil, sont assemblées à complémentarité de forme avec une partie (65) de carter de la tête (39) de réducteur, et dans laquelle l'embrayage (53, 61, 63, 67, 69, 71) peut être actionné par un arbre (53) de commande, qui peut coulisser axialement, concentriquement à l'axe (9) de la tourelle dans le corps (1) de base et axialement dans le plateau (3) d'outil, entre les positions correspondant à la première position et à la deuxième position, **caractérisée en ce que** les dents (61, 63) d'accouplement prévues pour l'accouplement et le désaccouplement de la tête (39) de réducteur et du plateau (3) d'outil sont disposées sur la partie avant d'extrémité de l'arbre (53) de commande, passant à travers le carter (41) de la tête (39) de réduction, et peuvent être mises, pour des positions axiales correspondantes de l'axe (53) de commande, en prise et hors de prise avec des sièges (67, 69) de dents associés à la partie (59) avant d'extrémité du plateau (3) d'outil et à la partie (65) avant voisine du carter de la tête (39) de réducteur.

2. Tourelle d'outil suivant la revendication 1, **caractérisé en ce que** l'arbre (53) de commande comporte, dans une partie se trouvant à l'intérieur du corps (1) de base, comme partie constituante de l'embrayage (53, 61, 63, 67, 69, 71), une dent (73) d'accouplement qui est en saillie radialement, qui forme un embrayage (71) à une seule dent, qui, dans la deuxième position, vient en prise par complémentarité de forme avec un siège (75) de dents du corps (1) de base et qui forme la liaison de solidarité en rotation entre la tête (39) de réducteur et le corps (1) de base.

3. Tourelle d'outil suivant la revendication 2, **caractérisée en ce que** la dent (73) d'accouplement de l'embrayage (71) à une seule dent, vient en prise avec le siège (75) de dent du corps (1) de base, dans une position de la tête (39) de réduction correspondant à une position de travail-sortie.

4. Tourelle d'outil suivant l'une des revendications 1 à 3, **caractérisée en ce que** l'arbre (53) de commande est entouré d'un premier arbre (29) creux, monté dans le corps (1) de base et prévu comme arbre entraînement de la tête (39) de réducteur, pour l'entraînement d'outil et d'un deuxième arbre (15) creux, monté au-dessus dans le corps (1) de base et relié en tant qu'arbre d'entraînement en pivotement au plateau (3) d'outil.

5. Tourelle d'outil suivant la revendication 4, **caractérisée en ce que** le premier arbre (29) creux est en prise avec un pignon (49) de l'entraînement d'outil par une couronne (37) se trouvant dans la tête (39) de réducteur.

6. Tourelle d'outil suivant la revendication 4 ou 5, **caractérisée en ce qu'**un moteur (17) de couple, pour un entraînement direct du mouvement de pivotement du plateau (3) d'outil, est monté sur le deuxième arbre (15) creux du rotor (19).

7. Tourelle d'outil suivant l'une des revendications 4 à 6, **caractérisée en ce qu'**un frein (25) à disques multiples est présent entre le corps (1) de base et le deuxième arbre (15) creux pour fixer la position de pivotement du plateau (3) d'outil.
